# EUROPEAN PATENT APPLICATION

(11) **EP 4 768 679 A1**
(43) Date of publication of application: **01.07.2026**
(21) Application number: 24920012.2
(22) Date of filing: 31.12.2024
(51) Int. Cl.: E04F 15/10, E04F 15/18, E04F 15/20, B32B 3/12

(54) **SOUNDPROOF FLOORING**

(30) Priority: 24.01.2024 CN 202420175031 U; 22.10.2024 CN 202422545461 U; 12.12.2024 CN 202423072289 U
(71) Applicant: Changzhou Bemate Home Technology Co., Ltd., Changzhou City, Jiangsu 213100 (CN)
(72) Inventor: DONG, Junxiang, Changzhou City, Jiangsu 213100 (CN); LI, Yanhui, Changzhou City, Jiangsu 213100 (CN); XU, Hongkai, Changzhou City, Jiangsu 213100 (CN)
(74) Representative: Metida
(86) International application number: PCT/CN2024/144056
(87) International publication number: WO 2025/156934

(57) **Abstract**

A sound-absorbing floorboard includes a surface layer, a protective layer, a decorative layer, a first substrate, a first buffer layer and a second substrate. The surface layer is arranged on a first side of the protective layer, and the decorative layer is arranged on a second side of the protective layer. The first substrate is arranged between the decorative layer and the first buffer layer. The first buffer layer is arranged between the first substrate and the second substrate, and the first buffer layer has a porous structure and/or mesh structure.

## Description

### TECHNICAL FIELD

This application relates to floorboards, and more particularly to a sound-absorbing floorboard.

### BACKGROUND

The existing commercially-available floorboard products generally include a wear-resistant layer, a decorative layer, a substrate and a buffer layer to meet requirements in terms of strength, wear resistance, decorative effect and comfort. At present, in order to reduce the noise transmission, a silent pad with a sound-absorbing effect is often introduced at a bottom of the floorboard. However, the noise-reducing effect of the silent pad is limited. Therefore, it is necessary to provide a sound-absorbing floorboard which can effectively mitigate the noise transmission.

### SUMMARY

An object of this application is to provide a sound-absorbing floorboard to solve the problems in the prior art that the noise-reduction effect is limited.

A sound-absorbing floorboard is provided, comprising:
a surface layer;
a protective layer;
a decorative layer;
a first substrate;
a first buffer layer; and
a second substrate;
wherein the surface layer is arranged on a first side of the protective layer, and the decorative layer is arranged on a second side of the protective layer; the first substrate is arranged between the decorative layer and the first buffer layer; the first buffer layer is arranged between the first substrate and the second substrate; and the first buffer layer has a porous structure, a mesh structure or a combination thereof.

In an embodiment, the porous structure is a closed porous structure, a semi-closed porous structure or an open porous structure.

In an embodiment, the porous structure is made from a material selected from the group consisting of polyolefin foam, expanded polystyrene, expanded polypropylene, expanded rubber, an intumescent ethylene-vinyl acetate copolymer, expanded ethylene, expanded polyethylene, an ethylene-vinyl acetate copolymer, irradiated cross-linked polyethylene, polypropylene, a compressible natural material, expanded polystyrene and a combination thereof.

In an embodiment, the mesh structure is a honeycomb structure or a stacked network structure.

In an embodiment, the mesh structure is made from a material selected from the group consisting of an ethylene-vinyl acetate copolymer, irradiated cross-linked polyethylene, expanded polypropylene, expanded polystyrene and a combination thereof.

In an embodiment, the first substrate is selected from the group consisting of a fiberboard layer, a wood-plastic composite layer, a polyvinyl chloride resin layer, a vinyl tile, a polyethylene terephthalate layer, a polypropylene resin layer, a polyethylene terephthalate-1,4-cyclohexanedimethylene terephthalate layer and a combination thereof.

In an embodiment, the first substrate comprises at least one reinforcing layer, and the at least one reinforcing layer is arranged in the first substrate.

In an embodiment, the at least one reinforcing layer has a mesh structure.

In an embodiment, the mesh structure of the at least one reinforcing layer is made of glass fiber, jute and/or cotton.

In an embodiment, the sound-absorbing floorboard further comprises a second buffer layer; and the second buffer layer is arranged on a side of the second substrate away from the first buffer.

The present disclosure has the following beneficial effect.

Regarding the sound-absorbing floorboard provide herein, first buffer layer with a porous and/or honeycomb structure is provided, where the noise will experience multiple reflections and refractions, so as to attenuate the noise intensity and extend the sound transmission path, thereby offering a more effective noise-reduction effect.

### BRIEF DESCRIPTION OF THE DRAWINGS

In order to illustrate the technical solutions of this application or the prior art more clearly, the accompanying drawings required in the description of embodiments of the present disclosure or the prior art will be briefly introduced below. It is obvious that the following accompanying drawings only show some embodiments of this application, and for those of ordinary skill in the art, other relevant accompanying drawings can also be obtained according to these drawings without making creative effort.
Fig. 1 structurally shows a sound-absorbing floorboard according to an embodiment of the present disclosure.
Fig. 2 structurally shows the sound-absorbing floorboard according to an embodiment of the present disclosure.
Fig. 3 is a sectional view of a first buffer layer with a porous structure according to an embodiment of the present disclosure.
Fig. 4 is a sectional view of a first buffer layer with a mesh structure according to an embodiment of the present disclosure.
Fig. 5 is a structural diagram of a first substrate according to an embodiment of the present disclosure.
Fig. 6 is a structural diagram of the first substrate according to an embodiment of the present disclosure.
Fig. 7 is a perspective view of a first buffer groove arranged on a side of the sound-absorbing floorboard according to an embodiment of the present disclosure.
Fig. 8 is a cross-sectional view of the first buffer groove according to an embodiment of the present disclosure.
Fig. 9 shows an assembly of the first buffer groove according to an embodiment of the present disclosure.
Fig. 10 is a perspective view of a second buffer groove arranged on an end surface of the sound-absorbing floorboard according to an embodiment of the present disclosure.
Fig. 11 is a cross-sectional view of the second buffer groove according to an embodiment of the present disclosure.
Fig. 12 shows an assembly of the second buffer groove according to an embodiment of the present disclosure.

In the Figures: 10, surface layer; 11, protective layer; 12, decorative layer; 13, first substrate; 132, reinforcing layer; 14, first buffer layer; 15, second substrate; 16, second buffer layer; 17, first buffer groove; and 18, second buffer groove.

The realization of objectives, functional characteristics and advantages of the present disclosure will be further described below with reference of the accompanying drawings.

### DETAILED DESCRIPTION OF EMBODIMENTS

The technical solutions of the embodiments of the present disclosure will be clearly and completely described with reference to the accompanying drawings of the embodiments of the present disclosure. It is obvious that described herein are only some embodiments of the present disclosure, rather than all embodiments. Based on the embodiments of the present disclosure, other embodiments obtained by those of ordinary skill in the art without making creative effort shall fall within the scope of the present disclosure.

It should be noted that the terms, such as "up", "down", "left", "right", "front", "rear" and other directional indications used herein, are only used for illustrating relative position relationship and motion between components in a specific state (as shown in the accompanying drawings). If the specific state changes, the directional indication accordingly changes.

In addition, the terms "first" and "second" are only used for distinguishment rather than indicating or implying the relative importance or implicitly specifying the number of technical features indicated. Therefore, a feature defined with "first" or "second" may explicitly or implicitly indicates the inclusion of at least one of such features. Besides, the term "and/or" used herein includes three solutions, for example, "A" and/or "B" includes solution "A", solution "B", and a combination thereof. Technical solutions of embodiments can be combined with each other as long as the combined solution can be implemented by those skilled in the art. When a combination of the technical solutions is contradictory or cannot be realized, it should be considered that such a combination does not exist, and is not within the scope of the present disclosure.

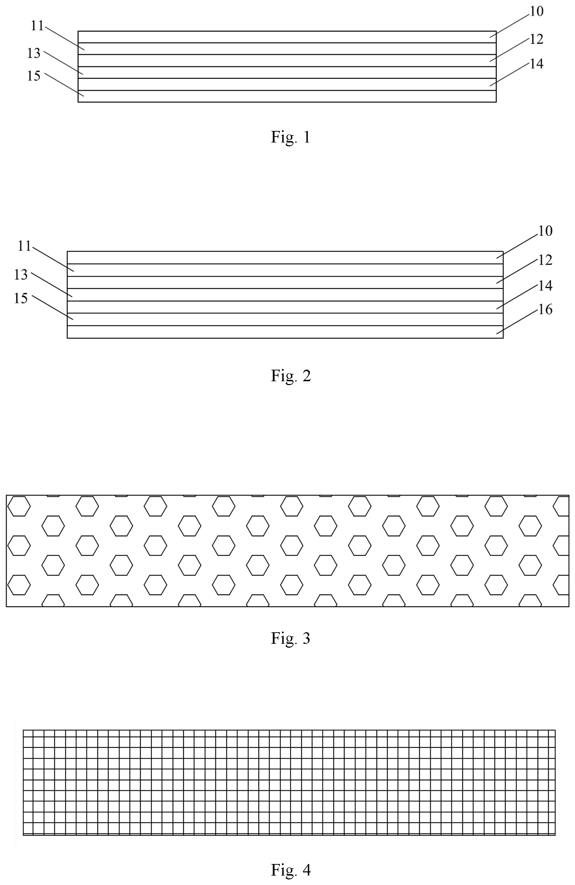

Referring to Figs. 1, 3 and 4, a sound-absorbing floorboard includes a surface layer 10, a protective layer 11, a decorative layer 12, a first substrate 13, a first buffer layer 14 and a second substrate 15 arranged in sequence. The surface layer 10 is arranged on a first side of the protective layer 11, and the decorative layer 12 is arranged on a second side of the protective layer 11. The first substrate 13 is arranged between the decorative layer 12 and the first buffer layer 14. The first buffer layer 14 is arranged between the first substrate 13 and the second substrate 15. The first buffer layer 14 has a porous structure, a mesh structure or a combination thereof.

The present disclosure provides the floorboard including the first buffer layer with the porous and/or mesh structure, where noise is reflected and refracted several times in the porous or honeycomb structure, so as to attenuate voice and extend propagation paths of sound waves, reaching a more effective reduction of transmission of noise. The first buffer layer with the porous and/or mesh structure also has compressibility, which can mitigate impact of contact between layers of the floorboard and contact between the floorboard and the ground, and reduce transmission of noise.

In an embodiment, the porous structure is a closed porous structure, a semi-closed porous structure or an open porous structure. The mesh structure is a honeycomb structure and a stacked network structure. The porous structure is made from a material selected from the group consisting of polyolefin foam, expanded polystyrene, expanded polypropylene, expanded rubber, an intumescent ethylene-vinyl acetate copolymer, expanded ethylene, expanded polyethylene, an ethylene-vinyl acetate copolymer (EVA), irradiated cross-linked polyethylene (IXPE), polypropylene (PP), a compressible natural material, expanded polystyrene (XPS) and a combination thereof. The mesh structure is made from a material selected from the group consisting of an ethylene-vinyl acetate copolymer (EVA), irradiated cross-linked polyethylene (IXPE), expanded polypropylene (XPP), polystyrene (XPS) and a combination thereof. It can be understood that the noise can be reflected and refracted several times in the porous structure and the mesh structure, so as to attenuate voice and extend the propagation paths of sound waves, and reduce of transmission of noise.

In an embodiment, referring to Fig. 2, the sound-absorbing floorboard further includes a second buffer layer 16. The second buffer layer 16 is arranged on a side of the second substrate 15 away from the first buffer 14. The second buffer layer provides the floorboard with sound attenuation effect, absorbing and reducing energy transmitted by sound waves during the use of the floorboard.

In an embodiment, the second buffer layer 16 is a sound-absorbing layer made of at least one polymer material or nonwoven fiber, such as but not limited to polyurethane, which can further optimize acoustic characteristics of the floorboard. The second buffer layer 16 is made from a material selected from the group consisting of an ethylene-vinyl acetate copolymer (EVA), irradiated cross-linked polyethylene (IXPE), expanded polypropylene (XPP), expanded polystyrene (XPS) and a combination thereof. The second buffer layer 16 can also be made of the compressible natural material, such as felt, cotton, wool, mycelium, hemp and cork. An interior of cork is composed of many small holes or cells, which are called "air chamber". Such structure of the cork gives the cork good temperature, and sound and vibration insulation properties, which can effectively isolate external noise and vibration. A density of the second buffer layer 16 is within a range of 65 kg/m³-300 kg/m³, especially 80 kg/m³-150 kg/m³. It can be understood that a bottom surface of the second substrate 15 is provided with at least one adhesive layer; or when the second buffer layer 16 is adopted, the second buffer layer 16 is provided with at least one adhesive layer. Each of the at least one adhesive layer is a conductive adhesive layer or a conductive glue layer.

In an embodiment, the first buffer layer 14 is made from a material selected from the group consisting of closed-cell flexible foam, compressible foam, a flexible polymer, an elastomer, the compressible natural material and a combination thereof. In an embodiment, the first buffer layer 14 includes at least 50% of the closed-cell flexible foam and/or the compressible foam. In an embodiment, the first buffer layer 14 includes at least 80% of the closed-cell flexible foam. The first buffer layer 14 can be made of the compressible foam with a closed porous structure, which can achieve sufficient compressible behavior while being strong enough to support a load applied by a top layer of the surface layer. The first buffer layer 14 can also be made of the compressible foam with a semi-closed porous structure or an open porous structure. It can be understood that the semi-closed porous structure or the open porous structure have an advantage of improved sound absorption. In an embodiment, the first buffer layer 14 is a foaming layer, which can be made by a foaming reaction, where a foam pore size and an opening rate of a foam material of the first buffer layer 14 are controlled by adjusting an amount of foaming catalyst so as to realize the open porous structure, the semi-closed porous structure and the closed porous structure. In an embodiment, the first buffer layer 14 is a non-foaming layer with a basically solid structure, in this case, optimal results can be obtained by using a flexible polymer and/or an elastomer selected from the group a rubber, a latex, an acrylic elastomeric epoxy resin, cis-polyisoprene (natural rubber, NR), cis-polybutadiene (butadiene rubber, BR), a nitrile rubber (NBR), a styrene-butadiene rubber (SBR) and ethylenepropylene monomer (EPM). When the first buffer layer 14 includes the compressible natural material, the compressible natural material is selected from the group consisting of felt, cotton, wool, mycelium, hemp, cork and their analogues. There are abundant pores or cells inside the cork, which are called "air cavity". Such structure of the cork gives the cork good temperature, and sound and vibration insulation properties, which can effectively isolate external noise and vibration. Embodiments described herein are not limited, and can be applied with any similar foam material with equivalent material properties. A thickness of the first buffer layer 14 is 0.8 mm-4 mm, especially 0.8 mm-2 mm. In an embodiment, the first buffer layer 14 has a thickness of 0.75 mm-1.25 mm in an uncompressed state.

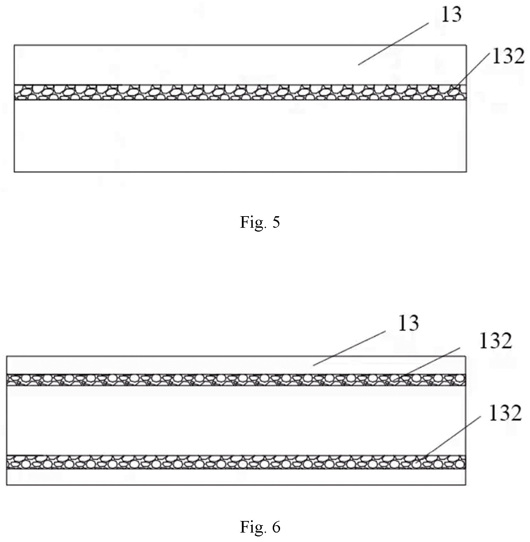

Referring to Fig. 5, in this embodiment, the first substrate 13 includes at least one reinforcing layer 132. The at least one reinforcing layer 132 is arranged in the first substrate 13. A thickness of each of the at least one reinforcing layer 132 is less than a thickness of the first substrate 13. In an embodiment, the thickness of each of the at least one reinforcing layer 132 is less than 1/2 of the thickness of the first substrate 13. Referring to Fig. 6, in an embodiment, the first substrate 13 includes at least two reinforcing layers 132. One of the at least two reinforcing layers 132 is arranged near an upper surface of the first substrate 13, and a distance between such reinforcing layer and the upper surface of the first substrate 13 is less than 1/2 of the thickness of the first substrate 13. The other one of the at least two reinforcing layers 132 is arranged near a lower surface of the first substrate 13, a distance between such reinforcing layer and the lower surface of the first substrate 13 is less than 1/2 of the thickness of the first substrate 13. By adding the at least one reinforcing layer 132, a whole strength of the first substrate is increased, and a dimensional stability of the first substrate at high temperature is increased, which reduces shrinkage.

In an embodiment, the first substrate 13 is selected from the group consisting of a fiberboard layer, a wood-plastic composite layer, a polyvinyl chloride resin layer, a luxury vinyl tile material layer (LVT base material layer), a polyethylene terephthalate layer (PET layer), a polypropylene resin layer (PP substrate layer), a polyethylene terephthalate-1, 4-cyclohexanedimethylene terephthalate layer (PETG substrate layer) and a combination thereof.

In an embodiment, the polyvinyl chloride resin layer includes a foamed vinyl chloride substrate layer and a rigid polyvinyl chloride substrate layer.

In an embodiment, the at least one reinforcing layer 132 has a mesh structure, and the mesh structure is made of glass fiber, jute and/or cotton. The first substrate 13 is selected from the group consisting of the high-density fiberboard layer, the wood-plastic composite layer, the polyvinyl chloride resin layer, the luxury vinyl tile material layer (LVT base material layer), the polyethylene terephthalate layer (PET layer), the polypropylene resin layer (PP substrate layer), the polyethylene terephthalate 1, 4-cyclohexane dimethyl ester layer (PETG substrate layer) and the combination thereof, where the polyvinyl chloride resin layer includes the foamed vinyl chloride substrate layer and the rigid polyvinyl chloride substrate layer. When the first substrate 13 is absent, the decorative layer 12 fails to be directly attached to the first buffer layer 14, causing unstable attachment. In this case, it cannot simulate the feet feel on the wooden floorboard in a use state. When a hardness of the decorative layer 12 is low, a top of the floorboard will produce an obvious depression, while a setting of the first substrate 13 can improve mechanical properties of the top of the floorboard, which will not adversely affect an overall flexibility of the floorboard, so that the top of the floorboard is configured to simulate a hard texture of a wood floorboard. In this way, the top of the floorboard will not cause top depression, which facilitates the attachment of the decorative layer.

In an embodiment, the surface layer 10 is a surface layer with surface characteristics, such as antibacterial, anti-slip, anti-water, scratch resistance, anti-aging function, and the surface layer 10 can be an ultraviolet curable coating (UV) layer or a paint layer. In an embodiment, the surface layer 10 has a raised pattern.

In an embodiment, the protective layer 11 is a wear-resistant layer or a scratch-resistant layer. The wear-resistant layer includes one or more transparent layers of thermoplastic or thermosetting materials. The thermoplastic or thermosetting materials include but not limited to polyvinyl chloride (PVC), polystyrene (PS), polyethylene (PE), polyurethane (PU), acrylonitrile-butadiene-styrene (ABS), polypropylene (PP), polyethylene terephthalate (PET) and phenolic resin and/or melamine resin or formaldehyde resin. Fillers, such as aluminum oxide and metallic powder, can also be used. The wear-resistant layer can also be in liquid or paste form made of thermosetting resins, such as phenolic resin and/or melamine resin or formaldehyde resin. In addition, the wear-resistant layer can include an inherently scratch-resistant thermosetting resin impregnated with a carrier layer such as paper or lignocellulose, or is basically the inherently scratch-resistant thermosetting resin impregnated with the carrier layer such as paper or lignocellulose. On a case that the wear-resistant layer is basically the inherently scratch-resistant thermosetting resin impregnated with the carrier layer such as paper or lignocellulose, an advantage of such embodiment is that urea-formaldehyde plays a relatively scratch-resistant role. Generally, a thickness of the wear-resistant layer is 0.1 mm-2.0 mm.

In an embodiment, the second substrate 15 is selected from the group consisting of a high-density fiberboard (HDF) layer, a wood-plastic composite layer (WPC), a polyvinyl chloride resin layer, a luxury vinyl tile floorboard (LVT) layer, a polyethylene terephthalate (PET) layer, a polypropylene resin (PP) layer, a polyethylene terephthalate 1, 4-cyclohexanedimethylene terephthalate (PETG) layer and a combination thereof. The second substrate 15 is configured to further contribute to the acoustic properties of the floorboard, providing better strength and stability.

In an embodiment, the first buffer layer 14 has a Shore A hardness of 80-100, the first substrate 13 has an elasticity modulus of 100 MPa-500 MPa, and the second substrate 15 has an elasticity modulus of 2000 MPa-7000 MPa. In an embodiment, the first substrate 13 has an elasticity modulus of 100 MPa-300 MPa. In the prior art, the first buffer layer is too soft, and a stone-plastic composite (SPC) base material of the first substrate is harder, while the buffer layer of the present disclosure is harder and has better elasticity, and the first substrate of the present disclosure adopts the luxury vinyl tile floorboard (LVT) layer, which is softer and easier to deform than the SPC base material. In this case, when a human foot steps down, a deformation degree of the first substrate and the first buffer layer is large, and when the foot is removed, an overall rebound of the first buffer layer and the first substrate is the best, which has better mute effect.

In this embodiment, the polyvinyl chloride resin layer includes the foamed vinyl chloride substrate layer and the rigid polyvinyl chloride substrate layer. When the second substrate 15 is the foamed vinyl chloride substrate layer, it has an elastic modulus within a range of 2000 MPa-3000 MPa. When the second substrate 15 is the rigid polyvinyl chloride substrate layer, it has an elastic modulus of 3000 MPa-7000 MPa.

In an embodiment, the decorative layer is composed of a multi-layer impregnated layer. The multi-layer impregnated layer is selected from the group consisting of lignocellulose, wood veneer, thermoplastic layers, stone veneer, veneer layer and a combination thereof. The veneer layer is preferably wood veneer, cork veneer or bamboo veneer. The veneer layer can also be made of other materials, such as tiles or porcelain, real stone veneer, rubber veneer, decorative plastic or vinyl material, linoleum and laminated decorative thermoplastic materials in a form of foil or film. The thermoplastic materials include polypropylene (PP), polyethylene terephthalate (PET) and polyvinyl chloride (PVC). A design of the decorative layer can be selected from a design database which includes digitally processed designs, traditional patterns, pictures or image files, custom digital artwork, random image patterns, abstract art, wood pattern images, ceramic or concrete style images, or user-defined patterns. The design of the decorative layer can be printed or duplicated by using a laser printer, an inkjet printer, or any other digital printing technology including conventional printing methods. The design of the decorative layer can also be satisfied by using various types of inks. In an embodiment, ink used in the printing method includes but properties which are not limited to waterproof, light-resistant, acid-free, metallic, glossy, glittery or deep black. The decorative layer can also be a basically transparent coating for better visual effect. The decorative layer can also have a pattern, where the pattern can be prepared by digital printing, inkjet printing, rotogravure printing presses, electronic spool (ELS) rotogravure printing presses, automatic plastic printing presses, offset printing, flexographic printing or rotogravure printing presses. A thickness of the decorative layer is 0.05 mm-0.10 mm, for example, the thickness of the decorative layer is 0.07 mm.

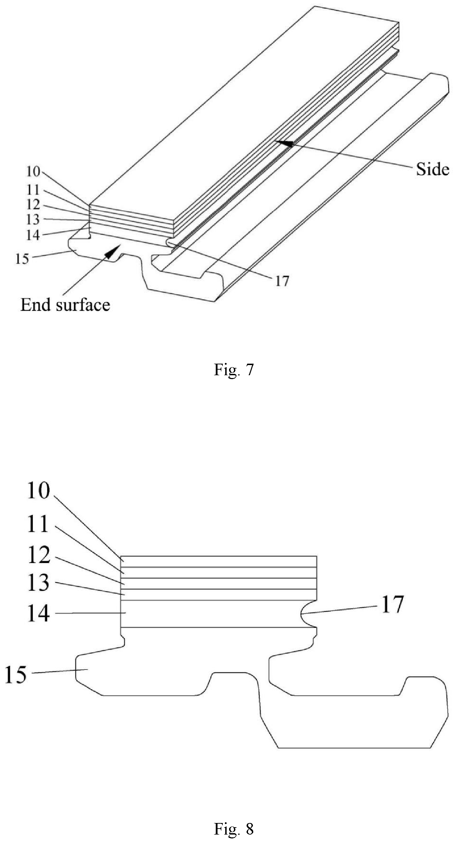

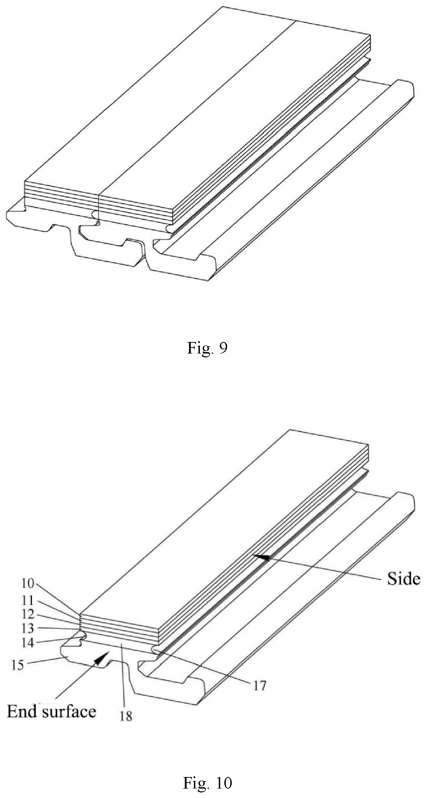

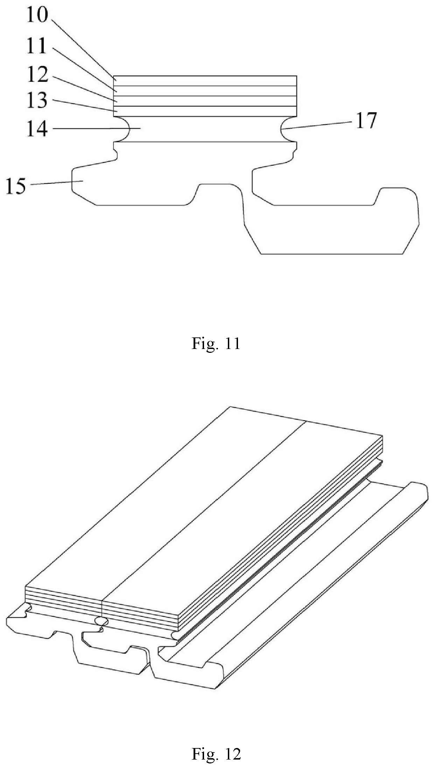

In an embodiment, referring to Figs. 7-9, the sound-absorbing floorboard is provided. At least one side of the first buffer layer 14 is provided with a buffer groove (17, 18). The buffer groove (17, 18) extends to both ends of each of the at least one side of the first buffer layer 14. An opening of the buffer groove (17, 18) is configured to face toward an outside of a side of the sound-absorbing floorboard. A widest width of the buffer groove (17, 18) is less than or equal to the thickness of the first buffer layer 14. When an upper part of the sound-absorbing floorboard is applied by forces, the first buffer layer is squeezed to expand to the side of the floorboard. The buffer groove (17, 18) is arranged on the first buffer layer 14 to accommodate a protrusion formed by extending of the first buffer layer. The first buffer layer 14 extends but does not form a protrusion on the side of the floorboard, preventing a joint of two floorboards from seam forming, seam expending or unevenness of the joint. The sound-absorbing floorboard has better mounting and use effects. In an embodiment, the sound-absorbing floorboard includes the surface layer 10, the protective layer 11, the decorative layer 12, the first substrate 13, the first buffer layer 14 and the second substrate 15 arranged in sequence. The surface layer 10 is arranged on the first side of the protective layer 11, and the decorative layer 12 is arranged on the second side of the protective layer 11. The first substrate 13 is arranged between the decorative layer 12 and the first buffer layer 14. The first buffer layer 14 is arranged between the first substrate 13 and the second substrate 15, where the first buffer layer 14 has the porous structure and/or mesh structure. At least one side of the sound-absorbing floorboard is provided with a first buffer groove 17, and the first buffer groove is arranged on the first buffer layer 14. The first buffer groove extends and penetrates towards both ends of the sound-absorbing floorboard. In an embodiment, referring to Figs. 10-11, at least one end surface of the sound-absorbing floorboard is provided with a second buffer groove 18, and the second buffer groove 18 is arranged on the first buffer layer 14. The second buffer groove 18 extends and penetrates towards both ends of the sound-absorbing floorboard. In an embodiment, each of two sides of the sound-absorbing floorboard is provided with the first buffer groove 17, each of two end surfaces of the sound-absorbing floorboard is provided with the second buffer groove 18. Each of the first buffer groove 17 and the second buffer groove 18 has a semicircle cross section, and other arc or triangular cross sections are also feasible. A width of an opening of each of the first buffer groove 17 and the second buffer groove 18 is less than or equal to the thickness of the first buffer layer 14. It should be noted that the first buffer groove 17 extends and penetrates towards both ends of the sound-absorbing floorboard, and the second buffer groove 18 extends and penetrates towards both sides of the sound-absorbing floorboard, which is a preferable embodiment. Under the premise of meeting the above mounting and use effects, the first buffer groove 17 and the second buffer groove 18 do not need to be completely penetrates, and the first buffer groove 17 and the second buffer groove 18 have sufficient length, and groove walls with smaller thicknesses at both ends of each of the first buffer groove 17 and the second buffer groove 18 do not affect the technical effect of the present disclosure, which also fall within the scope of the present disclosure.

### Example 1

The surface layer 10 adopted an ultraviolet curable coating. The protective layer 11 and the decorative layer 12 both adopted the PVC material. The first substrate 13 adopted the LVT floorboard. The first buffer layer adopted irradiated cross-linked polypropylene (IXPP), which was a closed flexible foam. The second substrate 15 adopted the rigid polyvinyl chloride substrate layer. The second buffer layer 16 adopted the IXPE. The first substrate included the at least one reinforcing layer 132, where the number of the at least one reinforcing layer 132 is one. The at least one reinforcing layer 132 adopted the glass fiber, and the glass fiber of the reinforcing layer 132 was arranged in the first substrate.

### Example 2

The surface layer 10 adopted the ultraviolet curable coating. The protective layer 11 and the decorative layer 12 both adopted the PVC material. The first substrate 13 adopted the LVT floorboard. The first buffer layer adopted the IXPP, which was the closed flexible foam. The second substrate 15 adopted the rigid polyvinyl chloride substrate layer. The second buffer layer 16 adopted the IXPE. The first substrate included the at least one reinforcing layer 132, where the number of the at least one reinforcing layer 132 is one. The at least one reinforcing layer 132 adopted the glass fiber, and the glass fiber of the reinforcing layer 132 was arranged in the first substrate.

### Example 3

The surface layer 10 adopted the ultraviolet curable coating. The protective layer 11 and the decorative layer 12 both adopted the PVC material. The first substrate f13 adopted the LVT floorboard. The first buffer layer adopted the IXPP, which was the closed flexible foam. The second substrate 15 adopted a foamed polyvinyl chloride substrate layer. The second buffer layer 16 adopted the IXPE. The first substrate included the at least one reinforcing layer 132, where the number of the at least one reinforcing layer 132 is one. The at least one reinforcing layer 132 adopted the glass fiber, and the glass fiber of the reinforcing layer 132 was arranged in the first substrate.

### Example 4

The surface layer 10 adopted the ultraviolet curable coating. The protective layer 11 and the decorative layer 12 both adopted the PVC material. The first substrate 13 adopted the HDF layer. The first buffer layer adopted the IXPP, which was the closed flexible foam. The second substrate 15 adopted the foamed polyvinyl chloride substrate layer. The second buffer layer 16 adopted the IXPE. The first substrate included the at least one reinforcing layer 132, where the number of the at least one reinforcing layer 132 is one. The at least one reinforcing layer 132 adopted the glass fiber, and the glass fiber of the reinforcing layer 132 was arranged in the first substrate.

### Comparative example 1

The surface layer 10 adopted the ultraviolet curable coating. The protective layer 11 and the decorative layer 12 both adopted the PVC material. The first substrate 13 adopted the LVT floorboard. The first buffer layer 14 adopted the IXPP, which was the closed flexible foam. The second substrate 15 adopted the rigid polyvinyl chloride substrate layer. The second buffer layer 16 adopted the IXPE. The first substrate 13 did not include the reinforcing layer 132.

### Comparative example 2

The surface layer 10 adopted the ultraviolet curable coating. The protective layer 11 and the decorative layer 12 both adopted the PVC material. The first substrate 13 adopted the LVT floorboard. The first buffer layer 14 adopted the IXPP, which was the closed flexible foam. The second substrate 15 adopted the foamed polyvinyl chloride substrate layer. The second buffer layer 16 adopted the IXPE. The first substrate 13 did not include the reinforcing layer 132.

### Comparative example 3

The surface layer 10 adopted the ultraviolet curable coating. The protective layer 11 and the decorative layer 12 both adopted the PVC material. The first substrate 13 adopted the LVT floorboard. The first buffer layer adopted the IXPP, which is the closed flexible foam. The second substrate 15 adopted the rigid polyvinyl chloride substrate layer. The second buffer layer 16 adopted the IXPE. The reinforcing layer 132 was arranged below the first substrate.

### Comparative example 4

The surface layer 10 adopted the ultraviolet curable coating. The protective layer 11 and the decorative layer 12 both adopted the PVC material. The first substrate 13 adopted the LVT floorboard. The first buffer layer adopted the IXPP, which is the closed flexible foam. The second substrate 15 adopted the foamed polyvinyl chloride substrate layer. The second buffer layer 16 adopted the IXPE. The reinforcing layer 132 was arranged below the first substrate.

### Comparative example 5

The surface layer 10 adopted the ultraviolet curable coating. The protective layer 11 and the decorative layer 12 both adopted the PVC material. The first substrate 13 adopted the LVT floorboard. The first buffer layer adopted the IXPP, which is the closed flexible foam. The second substrate 15 adopted the rigid polyvinyl chloride substrate layer. The second buffer layer 16 adopted the IXPE. The reinforcing layer 132 was arranged above the first substrate.

### Comparative example 6

The surface layer 10 adopted the ultraviolet curable coating. The protective layer 11 and the decorative layer 12 both adopted the PVC material. The first substrate 13 adopted the LVT floorboard. The first buffer layer adopted the IXPP, which is the closed flexible foam. The second substrate 15 adopted the foamed polyvinyl chloride substrate layer. The second buffer layer 16 adopted the IXPE. The reinforcing layer 132 was arranged above the first substrate.

Floorboards obtained in Examples 1-4 and Comparative examples 1-6 were baked in an oven at 80 °C for 6 h for comparative analysis, and results were shown in Table 1.

**Table 1 Results of heat resistance**

| Order | Warpage test | Shrinkage test (Lateral direction) | Shrinkage test (Longitudinal direction) |
|---|---|---|---|
| Example 1 | 0.25 mm | 0.01% | 0.03% |
| Example 2 | 0.2 mm | 0.02% | 0.05% |
| Example 3 | 0.3 mm | 0.01% | 0.04% |
| Example 4 | 0.2 mm | 0.02% | 0.04% |
| Comparative example 1 | 0.9 mm | 0.04% | 0.13% |
| Comparative example 2 | 1.0 mm | 0.02% | 0.15% |
| Comparative example 3 | 0.9 mm | 0.03% | 0.08% |
| Comparative example 4 | 0.8 mm | 0.02% | 0.10% |
| Comparative example 5 | 0.8 mm | 0.05% | 0.12% |
| Comparative example 6 | 0.8 mm | 0.04% | 0.14% |

It can be seen from Table 1 that, compared with the floorboard prepared in Comparative examples 1-6, the floorboard prepared in Examples 1-4 have significantly better heat resistance owing to the setting of the reinforcing layer in the first substrate, which have better dimensional stability at high temperature (small warpage) and lower shrinkage.

Described above are only preferred embodiments of the present disclosure, which are not intended to limit the disclosure. Under the sprits of this application, any equivalent replacements or direct/indirect application in other arts by utilizing the specification and accompanying drawings of this application shall fall within the scope of this application defined by the appended claims.

## Claims

1. A sound-absorbing floorboard, comprising:
a surface layer;
a protective layer;
a decorative layer;
a first substrate;
a first buffer layer; and
a second substrate;
**characterized in that** the surface layer is arranged on a first side of the protective layer, and the decorative layer is arranged on a second side of the protective layer; the first substrate is arranged between the decorative layer and the first buffer layer; the first buffer layer is arranged between the first substrate and the second substrate; and the first buffer layer has a porous structure, a mesh structure or a combination thereof.

2. The sound-absorbing floorboard according to claim 1, **characterized in that** the porous structure is a closed porous structure, a semi-closed porous structure or an open porous structure.

3. The sound-absorbing floorboard according to claim 2, **characterized in that** the porous structure is made from a material selected from the group consisting of polyolefin foam, expanded polystyrene, expanded polypropylene, expanded rubber, an intumescent ethylene-vinyl acetate copolymer, expanded ethylene, expanded polyethylene, an ethylene-vinyl acetate copolymer, irradiated cross-linked polyethylene, polypropylene, a compressible natural material, polystyrene and a combination thereof.

4. The sound-absorbing floorboard according to claim 1, **characterized in that** the mesh structure is a honeycomb structure or a stacked network structure.

5. The sound-absorbing floorboard according to claim 4, **characterized in that** the mesh structure is made from a material selected from the group consisting of an ethylene-vinyl acetate copolymer, irradiated cross-linked polyethylene, expanded polypropylene, expanded polystyrene and a combination thereof.

6. The sound-absorbing floorboard according to claim 1, **characterized in that** the first substrate is selected from the group consisting of a fiberboard layer, a wood-plastic composite layer, a polyvinyl chloride resin layer, a vinyl tile, a polyethylene terephthalate layer, a polypropylene resin layer, a polyethylene terephthalate-1,4-cyclohexanedimethylene terephthalate layer and a combination thereof.

7. The sound-absorbing floorboard according to claim 1, **characterized in that** the first substrate comprises at least one reinforcing layer, and the at least one reinforcing layer is arranged in the first substrate.

8. The sound-absorbing floorboard according to claim 7, **characterized in that** the at least one reinforcing layer has a mesh structure.

9. The sound-absorbing floorboard according to claim 8, **characterized in that** the mesh structure of the at least one reinforcing layer is made of glass fiber, jute and/or cotton.

10. The sound-absorbing floorboard according to claim 1, **characterized in that** the sound-absorbing floorboard further comprises a second buffer layer; and the second buffer layer is arranged on a side of the second substrate away from the first buffer.

11. The sound-absorbing floorboard according to claim 1, **characterized in that** at least one side of the first buffer layer is provided with a buffer groove; and the buffer groove extends to both ends of each of the at least one side of the first buffer layer.

12. The sound-absorbing floorboard according to claim 11, **characterized in that** an opening of the buffer groove is configured to face toward an outside of a side of the sound-absorbing floorboard.

13. The sound-absorbing floorboard according to claim 11, **characterized in that** a width of the buffer groove is less than or equal to a thickness of the first buffer layer.

14. The sound-absorbing floorboard according to claim 1, **characterized in that** the first buffer layer has a Shore A hardness of 80-100, the first substrate has an elasticity modulus of 100 MPa-500 MPa, and the second substrate has an elasticity modulus of 2000 MPa-7000 MPa.

15. The sound-absorbing floorboard according to claim 14, **characterized in that** the first substrate has an elasticity modulus of 100 MPa-300 MPa; and the second substrate is a foamed vinyl chloride substrate layer with an elastic modulus of 2000 MPa-3000 MPa.
